# EUROPÄISCHE PATENTSCHRIFT

(11) **EP 1 003 951 B1**
(45) Veröffentlichungstag und Bekanntmachung des Hinweises auf die Patenterteilung: **27.10.2004**
(21) Anmeldenummer: 98948779.8
(22) Anmeldetag: 12.08.1998
(51) Int. Cl.: E05F 15/14

(54) **ANTRIEBSVORRICHTUNG ZUM BEWEGEN VON GEGENSTÄNDEN**
DRIVE DEVICE TO MOVE OBJECTS
DISPOSITIF D'ENTRAINEMENT POUR DEPLACER DES OBJETS

(30) Priorität: 15.08.1997 DE 29714591 U
(43) Veröffentlichungstag der Anmeldung: 31.05.2000
(73) Patentinhaber: Reisinger, Heinrich, 90562 Kalchreuth (DE)
(72) Erfinder: Reisinger, Heinrich, 90562 Kalchreuth (DE)
(74) Vertreter: Tergau & Pohl Patentanwälte
(86) Internationale Anmeldenummer: PCT/DE1998/002324
(87) Internationale Veröffentlichungsnummer: WO 1999/009283

(56) Entgegenhaltungen:
- DE-A- 2 741 538
- DE-A- 3 340 557
- DE-A- 3 602 567
- DE-A- 4 234 873
- FR-A- 2 627 222
- US-A- 2 945 691
- US-A- 3 468 061
- US-A- 4 408 146
- US-A- 5 077 938
- US-A- 5 640 806

## Beschreibung

Die Erfindung betrifft eine Antriebsvorrichtung zum Bewegen von wenigstens einem Gegenstand, der in einer Laufschiene verschiebbar gelagert ist, mit einem Elektromotor, der über eine an dem einen Ende der Laufschiene angeordnete Antriebsrolle ein Zugmittel antreibt, das über eine an dem anderen Ende der Laufschiene angeordnete Umlenkvorrichtung umläuft und den Gegenstand bewegt, wobei die Rotorwelle des Elektromotors über ein Getriebe eine Abtriebswelle antreibt, die ihrerseits über eine Übersetzungsanordnung die Antriebsrolle antreibt und deren Achse im rechten Winkel zu der Achse der Rotorwelle verläuft.

Eine derartige Antriebsvorrichtung dient beispielsweise zum Bewegen einer Schiebetür, eines Schiebefensters, einer Trennwand oder dergleichen. Hierbei besteht das Problem, daß die Antriebsvorrichtung sehr viel Platz benötigt, da der Motor und das Getriebe so groß ausgelegt sein müssen, daß beide die Beschleunigungskräfte der anzutreibenden Gegenstände ohne Schaden aufnehmen können. Deshalb läßt sich diese Antriebsvorrichtung zum Beispiel nicht für einen nachträglichen Einbau in einen bereits vorhandenen Schiebetürrahmen verwenden, ohne eine Ausnehmung in dem Mauerwerk der die Schiebetür aufnehmenden Wand oder eine weit auskragende Blende vorzusehen.

Aus der DE-A-27 41 538 ist eine Schwenkvorrichtung für ein Garagentor bekannt, bei der das Antriebsaggregat auf der Antriebswelle für das Zugmittel-Antriebsrad schwenkfähig gelagert und in beide Schwenkrichtungen momenteneinstellbar abgestützt ist, wobei beim Überschreiten eines bestimmten Schwenkbereichs elektrische Schalter betätigt werden, die den Antriebsmotor abschalten. Damit sollen Beschädigungen von Fahrzeugen oder Verletzungen von Personen verhindert werden, die sich versehentlich im Schwenkbereich des sich öffnenden oder schließenden Garagentors befinden.

Diese bekannte Vorrichtung kann das eingangs erwähnte Problem beim Antrieb von Schiebetüren nicht lösen und gibt auch keinen Hinweis in diese Richtung.

Ferner beschreibt die US-A-3 468 061 eine Vorrichtung zum Antrieb einer Schiebetür, bei der ein Elektromotor mit seinem Gehäuse mit dem Gehäuse eines Getriebes verschraubt ist, wobei das so gebildete Antriebsaggregat an drei Punkten elastisch aufgehängt ist, um zu vermeiden, daß die Geräusche des laufenden Motors und des Getriebes auf den Türrahmen übertragen werden.

Diese bekannte Vorrichtung kann das eingangs erwähnte Problem beim Antrieb von Schiebetüren ebenfalls nicht lösen und gibt auch keinen Hinweis in diese Richtung, zumal die Größe des Motors einen nachträglichen Einbau in einen bereits vorhandenen Schiebetürrahmen unmöglich macht, wenn nicht eine Ausnehmung in dem Mauerwerk der die Schiebetür aufnehmenden Wand oder eine weit auskragende Blende vorgesehen wird.

Der Erfindung liegt die Aufgabe zugrunde, eine Antriebsvorrichtung der eingangs erwähnten Art zu schaffen, die eine einfache Konstruktion aufweist, im Vergleich zu den bekannten Vorrichtungen weniger elektrische Energie verbraucht und deren Abmessungen wesentlich kleiner sind, so daß eine Unterbringung in einem schlanken Gehäuse und somit - beispielsweise im Falle des Antriebs von Schiebetüren - ein nachträglicher Einbau in einen bereits vorhandenen Schiebetürrahmen ohne weiteres möglich ist.

Diese Aufgabe wird mit den Merkmalen des Anspruchs 1 dadurch gelöst, daß zum Herabsetzen der auf den Elektromotor und das Getriebe einwirkenden Beschleunigungskräfte des anzutreibenden Gegenstandes
a) der Elektromotor und das Getriebe mit der Abtriebswelle in einem gemeinsamen Gehäuse untergebracht sind, das um einen bestimmten Winkel um die Achse der Abtriebswelle elastisch schwenkbar gelagert ist und
b) der Elektromotor innerhalb des Gehäuses um einen bestimmten Winkel um die Achse seiner Rotorwelle elastisch schwenkbar gelagert ist.

Die mit der Erfindung erzielten Vorteile bestehen insbesondere darin, daß die großen Beschleunigungskräfte der anzutreibenden Gegenstände, beispielsweise der Türelemente von Schiebetüren, durch die Dämpfungswirkung der elastischen Lagerung sowohl des Gehäuses mit dem Elektromotor und dem Getriebe als auch des Elektromotors innerhalb des Gehäuses nur stark vermindert auf das Getriebe und den Elektromotor einwirken. Dadurch ist es möglich, sowohl das Getriebe als auch den Elektromotor wesentlich schwächer zu dimensionieren, so daß deren Abmessungen so stark verkleinert werden können, daß die ganze Vorrichtung mit geringeren Kosten hergestellt, in einem schmalen Gehäuse untergebracht und als Bausatz für zahlreiche Anwendungsfälle angeboten werden kann, bei denen Gegenstände aller Art über ein Zugmittel in zwei entgegengesetzten Richtungen bewegt werden sollen. Außerdem läßt sich durch die verkleinerten Abmessungen der Vorrichtung auch der Energieverbrauch wesentlich herabsetzen.

Dieses schmale Gehäuse der Vorrichtung hat beispielsweise innerhalb der die Türelemente einer Schiebetür aufnehmenden Laufschiene Platz. Ein nachträglicher Einbau in einen bereits vorhandenen Schiebetürrahmen ist somit ohne weiteres möglich.

Ein weiterer Vorteil besteht darin, daß der Elektromotor so dimensioniert ist, daß selbst bei einem Ausfall der elektronischen Steuerung keine Gefahr von Verletzungen für Personen besteht, die zufällig zwischen die sich schließenden Türflügel einer von diesem Elektromotor angetriebenen Schiebetür geraten. Das ist besonders in Krankenhäusern wichtig, wo derartige Schiebetüren vermehrt eingebaut werden.

Weitere Ausgestaltungen der Erfindung sowie deren Vorteile ergeben sich aus den Unteransprüchen. So ist es zur weiteren Verbesserung der Dämpfungseigenschaften zweckmäßig, daß das Gehäuse an wenigstens drei Punkten auf elastischen Puffern gelagert ist, die vorzugsweise aus Elastomer oder Gummi bestehen.

Dagegen ist nach einer anderen Ausgestaltung der Erfindung vorgesehen, daß das Gehäuse durch wenigstens ein Kugel- oder Gleitlager um die Achse der Abtriebswelle schwenkbar gelagert ist und daß wenigstens ein elastisches Element, beispielsweise eine Schrauben-, Spiral- oder Blattfeder, an dem Gehäuse angreift und durch eine entsprechende Dimensionierung den elastischen Schwenkbereich des Gehäuses bestimmt.

Um die Übertragung des Motorgeräusches auf Teile außerhalb des Gehäuses herabzusetzen, ist nach einer weiteren Fortbildung der Erfindung vorgesehen, daß die Abtriebswelle die Antriebsrolle über eine Übersetzungsanordnung antreibt, die eine auf der Abtriebswelle befestigte zweite Rolle aufweist, die über einen Riemen eine mit der Antriebsrolle einstückig verbundene dritte Rolle antreibt, die zusammen mit der Antriebsrolle um eine parallel zu der Achse der Abtriebswelle verlaufende Achse drehbar gelagert ist, wobei die Lager der aus der Antriebsrolle und der dritten Rolle gebildeten Doppelrolle sowie der Abtriebswelle als Kunststoffgleitlager ausgebildet sind, deren Kunststoff eine gewisse Elastizität aufweist und dadurch im Vergleich zu den sonst üblichen Kugellagern eine bessere Körperschalldämpfung bewirkt.

Eine zusätzliche Dämpfung wird ferner dadurch erreicht, daß das Zugmittel und der Riemen als Keilriemen oder als Zahnriemen und die entsprechenden Rollen als Keilriemenräder oder als Zahnriemenräder ausgebildet sind.

Zur weiteren Platzersparnis ist vorgesehen, daß die Abtriebswelle zusammen mit der Übersetzungsanordnung und der Antriebsrolle in dem an den Elektromotor in Richtung zu dem Getriebe sich anschließenden Raum untergebracht ist, dessen Höhe kleiner als der Durchmesser des Elektromotors ist.

Um ein schnelles Abbremsen der bewegten Gegenstände zu ermöglichen, ist ferner vorgesehen, daß der Elektromotor ein mit niedriger Spannung, beispielsweise 24 V, betriebener Gleichstrommotor ist. Dieser kann durch elektrisches Kurzschließen oder durch einen eingeprägten Gegenstrom abgebremst werden.

Damit bei Stromausfall die Gegenstände von Hand bewegt werden können, ist ferner vorgesehen, daß das Getriebe als nicht selbsthemmendes Schneckengetriebe oder als Kegelgetriebe ausgebildet ist. Dadurch kann auf den Einbau einer teuren ein- und ausrückbaren Kupplung verzichtet werden.

### GEÄNDERTES BLATT

Um eine Endabschaltung und ein Abbremsen der bewegten Gegenstände automatisch steuern zu können, ist ferner vorgesehen, daß im Bereich der Übersetzungsanordnung oder des Getriebes eine Impulsscheibe für eine Weg-Zeit-Messung sowie eine mechanische oder elektromagnetische Stopvorrichtung, insbesondere eine Magnetbremse oder ein Hubmagnet, angeordnet sind.

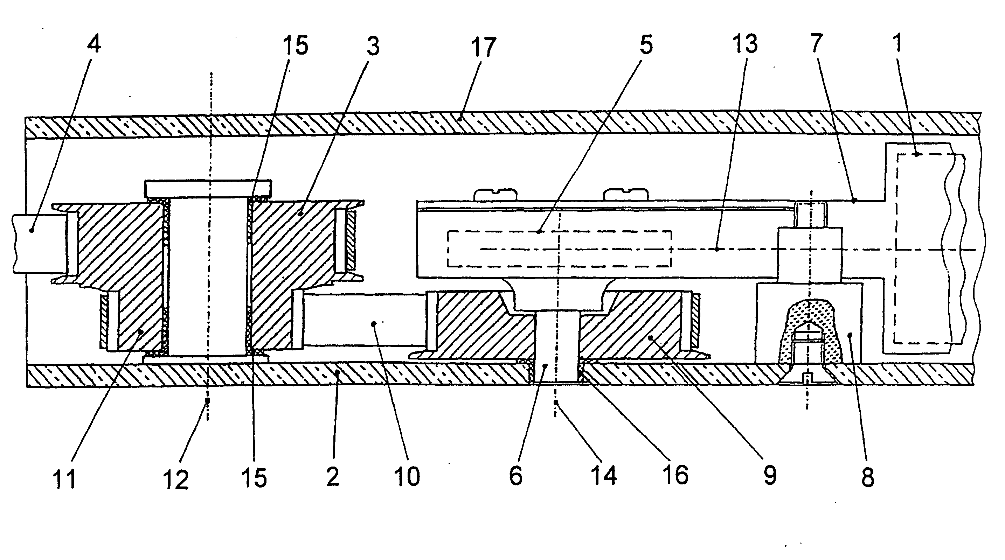

Ein Ausführungsbeispiel der Erfindung ist in der Zeichnung dargestellt und wird im folgenden näher beschrieben. Die einzige Figur zeigt eine Seitenansicht der Antriebsvorrichtung, teilweise im Schnitt. Diese Antriebsvorrichtung zum Bewegen von (nicht dargestellten) Gegenständen, insbesondere von Schiebetüren, Schiebefenstern, Trennwänden oder dergleichen, die in einer (ebenfalls nicht dargestellten) Laufschiene verschiebbar gelagert sind, enthält einen Elektromotor 1, vorzugsweise einen mit einer Spannung von etwa 24 V betriebenen Gleichstrommotor, der zusammen mit einem von dessen Rotorwelle angetriebenen Getriebe 5 in einem gemeinsamen Gehäuse 7 untergebracht ist.

## Patentansprüche

1. Antriebsvorrichtung zum Bewegen von wenigstens einem Gegenstand, der in einer Laufschiene verschiebbar gelagert ist, mit einem Elektromotor (1), der über eine an dem einen Ende der Laufschiene angeordnete Antriebsrolle (3) ein Zugmittel (4) antreibt, das über eine an dem anderen Ende der Laufschiene angeordnete Umlenkvorrichtung umläuft und den Gegenstand bewegt, wobei die Rotorwelle des Elektromotors (1) über ein Getriebe (5) eine Abtriebswelle (6) antreibt, die ihrerseits über eine Übersetzungsanordnung (9, 10, 11) die Antriebsrolle (3) antreibt und deren Achse (14) im rechten Winkel zu der Achse (13) der Rotorwelle verläuft,
**dadurch gekennzeichnet, daß** zum Herabsetzen der auf den Elektromotor (1) und das Getriebe (5) einwirkenden Beschleunigungskräfte des anzutreibenden Gegenstandes
a) der Elektromotor (1) und das Getriebe (5) mit der Abtriebswelle (6) in einem gemeinsamen Gehäuse (7) untergebracht sind, das um einen bestimmten Winkel um die Achse (14) der Abtriebswelle (6) elastisch schwenkbar gelagert ist und
b) der Elektromotor (1) innerhalb des Gehäuses (7) um einen bestimmten Winkel um die Achse (13) seiner Rotorwelle elastisch schwenkbar gelagert ist.

2. Antriebsvorrichtung nach Anspruch 1, **dadurch gekennzeichnet, daß** das Gehäuse (7) an wenigstens drei Punkten auf elastischen Puffern (8) gelagert ist, die vorzugsweise aus Elastomer oder Gummi bestehen.

3. Antriebsvorrichtung nach Anspruch 1, **dadurch gekennzeichnet, daß** das Gehäuse (7) durch wenigstens ein Kugel- oder Gleitlager um die Achse der Abtriebswelle (6) schwenkbar gelagert ist und daß wenigstens ein elastisches Element, beispielsweise eine Schrauben-, Spiral- oder Blattfeder, an dem Gehäuse (7) angreift und durch seine Dimensionierung den elastischen Schwenkbereich des Gehäuses (7) bestimmt.

4. Antriebsvorrichtung nach einem der Ansprüche 1 bis 3, **dadurch gekennzeichnet, daß** die Abtriebswelle (6) die Antriebsrolle (3) über eine Übersetzungsanordnung (9, 10, 11) antreibt, die eine auf der Abtriebswelle (6) befestigte zweite Rolle (9) aufweist, die über einen Riemen (10) eine mit der Antriebsrolle (3) einstückig verbundene dritte Rolle (11) antreibt, die zusammen mit der Antriebsrolle (3) um eine parallel zu der Achse (14) der Abtriebswelle (6) verlaufende Achse (12) drehbar gelagert ist, wobei die Lager (15, 16) der aus der Antriebsrolle (3) und der dritten Rolle (11) gebildeten Doppelrolle sowie der Abtriebswelle (6) als Kunststoffgleitlager ausgebildet sind, deren Kunststoff eine gewisse Elastizität aufweist.

5. Antriebsvorrichtung nach Anspruch 4, **dadurch gekennzeichnet, daß** der Riemen (10) als Keilriemen oder als Zahnriemen und die zweite Rolle (9) und die dritte Rolle (11) entsprechend als Keilriemenrad oder als Zahnriemenrad ausgebildet sind.

6. Antriebsvorrichtung nach einem der Ansprüche 1 bis 5, **dadurch gekennzeichnet, daß** das Zugmittel (4) als Keilriemen, als Zahnriemen oder als Zugseil und die Antriebsrolle (3) und die Umlenkvorrichtung entsprechend als Keilriemenrad, als Zahnriemenrad oder als Seilrolle ausgebildet sind.

7. Antriebsvorrichtung nach einem der Ansprüche 4 bis 6, **dadurch gekennzeichnet, daß** die Abtriebswelle (6) zusammen mit der Übersetzungsanordnung (9, 10, 11) und der Antriebsrolle (3) in dem an den Elektromotor (1) in Richtung zu dem Getriebe (5) sich anschließenden Raum untergebracht ist, dessen Höhe kleiner als der Durchmesser des Elektromotors (1) ist.

8. Antriebsvorrichtung nach einem der Ansprüche 1 bis 7, **dadurch gekennzeichnet, daß** der Elektromotor (1) ein mit niedriger Spannung, beispielsweise 24 V, betriebener Gleichstrommotor ist.

9. Antriebsvorrichtung nach einem der Ansprüche 1 bis 8, **dadurch gekennzeichnet, daß** das Getriebe (5) als nicht selbsthemmendes Schneckengetriebe ausgebildet ist.

10. Antriebsvorrichtung nach einem der Ansprüche 1 bis 9, **dadurch gekennzeichnet, daß** im Bereich der Übersetzungsanordnung (9, 10, 11) oder des Getriebes (5) eine Impulsscheibe für eine Weg-Zeit-Messung sowie eine mechanische oder elektromagnetische Stopvorrichtung, insbesondere eine Magnetbremse oder ein Hubmagnet, angeordnet sind.

## Claims

1. A driving arrangement for moving at least one object, which is positioned movably inside a runner rail, comprising an electric motor (1) that operates a traction means (4), arranged at the one end of the runner rail, by way of a drive pulley (3), which traction means circulates around a reversing device that is arranged at the other end of the runner rail and moves the object along, wherein the rotor shaft of the electric motor (1) drives a driven shaft (6) via a gear (5), which driven shaft in turn operates the drive pulley (3) via a transmission arrangement (9, 10, 11) and has an axis (14) that extends at a right angle to the axis (13) of the rotor shaft,
**characterized in that** in order to reduce the acceleration forces of the object to be moved, which act upon the electric motor (1) and the gear (5),
a) the electric motor (1), the gear (5) and the driven shaft (6) are installed together in a joint housing (7), which is positioned such that it can elastically pivot at a specific angle around the axis (14) of driven shaft (6),
b) the electric motor (1) is installed inside the housing (7) such that it can pivot elastically around the axis (13) of its rotor shaft.

2. A driving arrangement according to claim 1, **characterized in that** the housing (7) rests in at least three locations on elastic buffers (8), which are preferably made of rubber or elastomer.

3. A driving arrangement according to claim 1, **characterized in that** the housing (7) is positioned such that it can pivot around the axis of the driven shaft (6) with at least one a ball bearing or sliding bearing and that at least one elastic element, for example a helical spring, a spiral spring or a leaf spring, acts upon the housing (7) and determines the elastic pivoting range of the housing (7) with is dimensioning.

4. A driving arrangement according to one of the claims 1 to 3, **characterized in that** the driven shaft (6) drives the drive pulley (3) via a transmission arrangement (9, 10, 11), which comprises a second pulley (9) that is attached to the driven shaft (6) and operates by way of a belt (10) a third pulley (11), which is connected as one piece with the drive pulley (3), said third pulley together with the drive pulley (3) being positioned such that it can pivot around an axis (12) that extends parallel to the axis (14) of driven shaft (6), wherein the bearings (15, 16) for the drive pulley (3) and the third pulley (11) that is designed as double pulley, as well as the driven shaft (6) are designed as plastic sliding bearings, made of a plastic with a certain elasticity.

5. A driving arrangement according to claim 4,
**characterized in that** the belt (10) is designed as V-belt or as toothed belt and the second pulley (9) and the third pulley (11) are correspondingly designed as V-belt pulley or as toothed belt pulley.

6. A driving arrangement according to one of the claims 1 to 5, **characterized in that** the traction means (4) is designed as a V-belt, a toothed belt or as traction rope and the drive pulley (3) as well as the reversing device are correspondingly designed as V-belt pulley, as toothed belt pulley or as rope pulley.

7. A driving arrangement according to one of the claims 4 to 6, **characterized in that** the driven shaft (6), the transmission arrangement (9, 10, 11) and the drive pulley (3) are installed together in the space adjoining the electric motor (1) in the direction of gear (5), the height of which is lower than the diameter of the electric motor (1).

8. A driving arrangement according to one of the claims 1 to 7, **characterized in that** the electric motor (1) is a direct-current motor that is operated with low voltage, for example 24 V.

9. A driving arrangement according to one of the claims 1 to 8, **characterized in that** the gear (5) is designed as non self-locking worm gear.

10. A driving arrangement according to one of the claims 1 to 9, **characterized in that** an impulse disk for the distance/time measurement, as well as a mechanical or electro-magnetic stopping device, in particular a magnetic brake or an electric lifting magnet, are arranged in the region of the transmission arrangement (9, 10, 11) or the gear (5).

## Revendications

1. Dispositif d'entraînement pour déplacer au moins un objet, qui est monté à coulissement sur un rail de roulement, comprenant un moteur électrique (1), qui commande, sur un rouleau menant (3) agencé sur la première extrémité du rail de roulement, un moyen de traction (4), qui tourne sur un dispositif de renvoi agencé à l'autre extrémité du rail de roulement et déplace l'objet, l'arbre de rotor du moteur électrique (1) entraînant, via une transmission (5), un arbre de sortie (6), qui, pour sa part, entraîne le rouleau menant (3) via un dispositif multiplicateur et dont l'axe (14) s'étend perpendiculairement à l'axe (13) de l'arbre de rotor, **caractérisé en ce que**, pour réduire les forces d'accélération de l'objet à entraîner agissant sur le moteur électrique (1) et la transmission (5),
a) le moteur électrique (1) et la transmission (5) sont logés avec l'arbre de sortie (6) dans un boîtier commun (7) qui est monté à pivotement élastique d'un angle déterminé autour de l'axe (14) de l'arbre de sortie (6), et
b) le moteur électrique (1) à l'intérieur du boîtier (7) est monté à pivotement élastique d'un angle déterminé autour de l'axe (13) de son arbre de rotor.

2. Dispositif d'entraînement selon la revendication 1, **caractérisé en ce que** le boîtier (7) est monté au moins en trois points sur des tampons élastiques (8) qui sont constitués de préférence d'un élastomère ou de caoutchouc.

3. Dispositif d'entraînement selon la revendication 1, **caractérisé en ce que** le boîtier (7) est monté à pivotement par au moins un roulement à billes ou un palier lisse autour de l'axe de l'arbre de sortie (6) et **en ce qu'**au moins un élément élastique, par exemple un ressort hélicoïdal, spiral ou feuilleté, s'accroche au boîtier (7) et détermine, par son dimensionnement, la plage de pivotement élastique du boîtier (7).

4. Dispositif d'entraînement selon l'une quelconque des revendications 1 à 3, **caractérisé en ce que** l'arbre de sortie (6) entraîne l'arbre menant (3) via un dispositif multiplicateur (9, 10, 11) qui présente un deuxième rouleau (9) fixé sur l'arbre de sortie (6), qui entraîne, via une courroie (10), un troisième rouleau (11) qui est relié d'un seul tenant avec le rouleau d'entraînement (3) et est monté à rotation, conjointement avec le rouleau menant (3), autour d'un axe (12) s'étendant parallèlement à l'axe (14) de l'arbre de sortie (6), les paliers (15, 16) du double rouleau formé de l'arbre menant (3) et du troisième rouleau (11) ainsi que l'arbre de sortie (6) se présentant sous la forme de paliers lisses en matériau synthétique qui présente une certaine élasticité.

5. Dispositif d'entraînement selon la revendication 4, **caractérisé en ce que** la courroie (10) se présente sous la forme d'une courroie trapézoïdale ou d'une courroie crantée et le deuxième rouleau (9) et le troisième rouleau (11) de manière correspondante sous la forme d'une roue pour courroie trapézoïdale ou d'une roue pour courroie crantée.

6. Dispositif d'entraînement selon l'une quelconque des revendications 1 à 5, **caractérisé en ce que** le moyen de traction (4) se présente sous la forme d'une courroie trapézoïdale, d'une courroie crantée ou d'un câble de traction et le rouleau menant (3) et le dispositif de renvoi de manière correspondante sous la forme d'une roue pour courroie trapézoïdale, d'une roue pour courroie crantée ou d'une poulie de câble.

7. Dispositif d'entraînement selon l'une quelconque des revendications 4 à 6, **caractérisé en ce que** l'arbre de sortie (6) est logé, conjointement avec le dispositif multiplicateur (9, 10, 11) et l'arbre menant (3), dans l'espace attenant au moteur électrique (1) dans la direction de la transmission (5).

8. Dispositif d'entraînement selon l'une quelconque des revendications 1 à 7, **caractérisé en ce que** le moteur électrique (1) est un moteur à courant continu entraîné par une faible tension, par exemple 24 volts.

9. Dispositif d'entraînement selon l'une quelconque des revendications 1 à 8, **caractérisé en ce que** la transmission (5) se présente sous la forme d'une transmission à vis sans fin non autobloquante.

10. Dispositif d'entraînement selon l'une quelconque des revendications 1 à 9, **caractérisé en ce que**, dans la zone du dispositif multiplicateur (9, 10, 11) ou de la transmission (5), sont aménagés un disque à impulsions pour une mesure du trajet en fonction du temps ainsi qu'un dispositif d'arrêt mécanique ou électromagnétique, en particulier un frein magnétique ou un aimant de levage.
